# EUROPEAN PATENT SPECIFICATION

(11) **EP 1 863 206 B1**
(45) Date of publication and mention of the grant of the patent: **19.08.2009**
(21) Application number: 07010597.8
(22) Date of filing: 29.05.2007
(51) Int. Cl.: H04H 60/23

(54) **A method of switching a decryption key, a decryption device and a terminal**
Verfahren zur Umschaltung eines Entschlüsselungsschlüssel, einer Entschlüsselungsvorrichtung und Endgerät
Procédé de commutation de clés de décryptage, un dispositif de décryptage et un équipement terminal

(30) Priority: 30.05.2006 CN 200610078494
(43) Date of publication of application: 05.12.2007
(73) Proprietor: Huawei Technologies Co., Ltd., Longgang District Shenzhen Guangdong 518129 (CN)
(72) Inventor: Ma, Yong, Guangdong Province 518129 (CN)
(74) Representative: Goddar, Heinz J.

(56) References cited:
- EP-A- 0 840 477
- EP-A2- 0 786 881
- WO-A-88/06826
- WO-A-98/43431
- US-A- 4 995 080
- US-A1- 2002 146 131

## Description

This application claims benefit of CN Application No. 200610078494.0 filed on May 30, 2006, titled "A METHOD OF DECRYPTION KEY SWITCHING, A DECRYPTION DEVICE AND A TERMINAL EQUIPMENT'.

### Field of the Invention

The present invention relates to the field of communication technique, and in particular, to a method of decryption key switching, a decryption device and a terminal equipment.

### Background of the Invention

In broadcast-type services, in order to prevent non-authorized users from wiretapping, data in a channel need to be encrypted, and the decryption information should be sent to authorized users only. To ensure security, the decryption key must be updated periodically, so that non-authorized users may be effectively prevented from breaking down a key through "brute force attack". The authorized users can receive the updated key, so as not to be affected by the decryption key changing.

At present, when data in a broadcast-type service are encrypted, the corresponding decryption key is sent to the authorized users in advance, and at the same time, the moment (such as time or frame number) when a new key starts to be used is notified. From the notified moment, all of the authorized users will begin to use the new decryption key for decryption uniformly to get data normally. However non-authorized users who have not gotten the new key are not able to decrypt the data correctly.

Such a technology requires the network to keep strictly synchronous (time or frame number) with all the users and to notify all the authorized users of the new key before a predetermined moment. If strict data frame or time synchronization is not realized, users will not be able to adaptively perform key switching, and the received data can not be decrypted.

EP 0 840 477 A2 discloses a method for switching between decryption keys and a terminal. For that purpose, three cryptograms Cd, Ca and Cm are transmitted from a transmission apparatus via three transfer paths. Overall judging units use the information transmitted through the transfer paths to determine the secret key, and the correct secret key is then selected from the secret key storage unit for decryption.

### Summary of the Invention

An embodiment of the present invention provides a method of key switching for decrypting service data at a terminal, the method includes the following process:
storing at least two decryption keys at a terminal side for decrypting service data encrypted by network side using a corresponding encryption key, wherein one of the at least two decryption keys is a current decryption key;
receiving a dataframe with current service data and using the stored keys to decrypt the service data with a trial and error method, and checking whether the service data decrypted are correct based on a Cyclic Redundancy Code Check carried in the dataframe; and
selecting from the stored decryption keys a key with which the current service data can be successfully decrypted, and taking the selected decryption key as the current decryption key.

An embodiment of the present invention provides a data decryption device, which includes:
a storage module adapted to store at least two decryption keys, one of which is a current decryption key; and
a processing module communicating with the storage module, adapted to use the decryption keys to decrypt service data in a dataframe, and when failing to decrypt the service data use a non-current decryption key to decrypt the service data with a trial and error method, and check whether the service data decrypted are correct based on a Cyclic Redundancy Code Check carried in the dataframe, select a key with which current service data can be successfully decrypted from stored keys, and switch the selected key to be the current decryption key.

A further embodiment of the invention provides a terminal equipment, which includes an information-receiving module and a decrypting module communicating with the information-receiving module, wherein the decrypting module includes:
a key-storage submodule configured to store both a current decryption key and one or more non-current decryption keys received via the information-receiving module; and
a decrypting submodule configured to decrypt service data in a dataframe received via the information-receiving module by use of the current decryption key, and when failing to descrypt the service data, use a non-current decryption key to decrypt the service data with a trial and error method, and check whether the service data decrypted are correct based on a Cyclic Redundancy Code Check carried in the dataframe, and switch a key selected from the non-current decryption keys with which the service data can be successfully decrypted, to be the current decryption key.

According to one aspect of the present invention, the key that can successfully decrypt the current service data selected from locally stored keys may be switched to be the current decryption key after the network side changes the encryption key, so that the key can be switched adaptively. Moreover, this switching process has no special requirements on key distribution method and synchronization, and no overhead needs to be increased to support a strict data frame synchronization mechanism, so it is applicable to more situations.

### Brief Description of the Drawings

Fig.1 is a flow chart showing the decryption process after the terminal side receives a data frame according to a first embodiment of the invention;

Fig.2 is a block diagram of the terminal equipment in the first embodiment of the invention;

Fig.3 is a flow chart showing the decryption process after the terminal side receives a data frame according to a second embodiment of the invention;

Fig.4 is a flow chart showing the decryption process after the terminal side receives a data frame according to a third embodiment of the invention; and

Fig.5 is a flow chart showing the decryption process after the terminal side receives a data frame according to a fourth embodiment of the invention.

### Detailed Description of the Embodiments

Embodiments of the invention will now be further described in conjunction with the drawings.

Embodiment 1

In this embodiment, the invention will be described by taking as an example the case in which the terminal side may save the current decryption key and a non-current decryption key at the same time.

Before the network side changes the encryption key of the service data, it issues in advance to the terminal side a decryption key corresponding to the service data after the encryption key is changed. After the terminal side receives the decryption key, it determines whether a non-current decryption key is already stored; if yes, the terminal side substitutes the received decryption key for the stored non-current decryption key; otherwise, the terminal side saves the received decryption key directly.

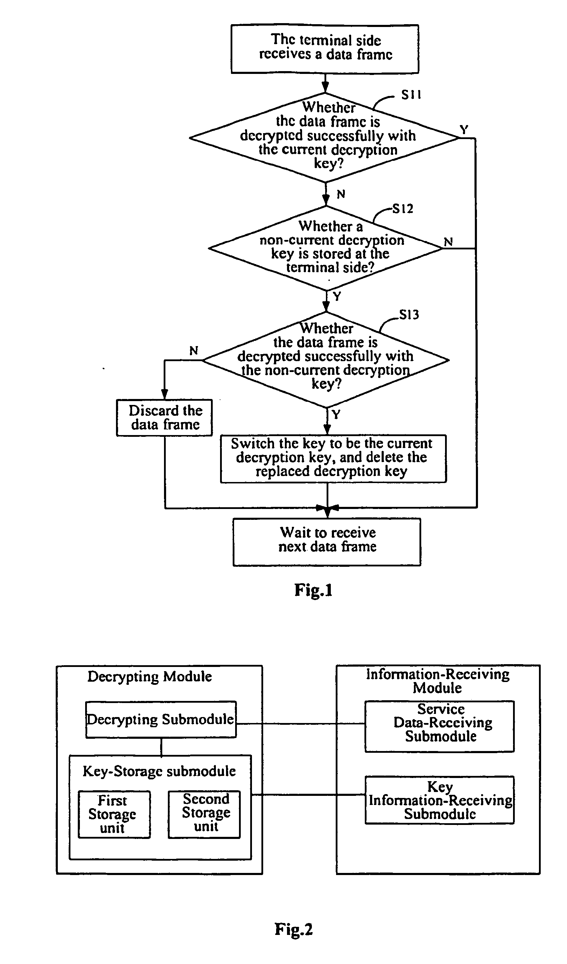

The decryption process each time after the terminal side receives a data frame is shown in Fig.1, which includes the following steps:

In block S11, when the terminal side receives a data frame, it decrypts the data frame using the current decryption key; if the decryption succeeds, the decryption process of the data frame terminates and the terminal side waits to receive next data frame; otherwise, the decryption process of the current data frame turns to process shown in block S12.

In block S12, it is determined whether a non-current decryption key is stored on the terminal side; if yes, the decryption process of the current data frame proceeds to process shown in block S13; otherwise, the decryption process of the current data frame terminates and the terminal side waits to receive next data frame.

In block S13, the terminal side decrypts the data frame using the non-current decryption key. If the decryption succeeds, it is considered that there happened key switching, and this non-current key is switched to be the current decryption key, the replaced decryption key is deleted, and the terminal side waits to receive next data frame; otherwise, it is considered that an error occurs in the processing of the data frame, and the data frame is discarded and the terminal side waits to receive next data frame.

It can be seen that when the data frame cannot be decrypted with any of the keys, the current decryption key is not switched, and when the terminal side receives the next data frame, the current decryption key will still be used preferably for decryption.

In the above process, the terminal side may determine whether the decryption is successful according to a Cyclical Redundancy Code Check (CRC) carried in the data frame. In a specific embodiment, CRC may not be encrypted so as to increase the probability of passing the CRC check with decreased decryption errors.

In this embodiment, the data decryption device for the terminal side to perform decryption includes the following modules:

a storage module for storing both a current decryption key and non-current decryption keys, which may be subdivided into a first storage unit and a second storage unit for storing the current decryption key and the non-current decryption keys respectively; and

a processing module, communicating with the key-storage submodules, and adapted to decrypt data using the current decryption key, and select a key with which the current service data can be successfully decrypted from the non-current decryption keys and switch the selected key to be the current decryption key after failing to decrypt the data with the original current decryption key.

Fig.2 shows a terminal equipment in this embodiment, which includes a decrypting module and an information-receiving module.

The decrypting module is used for decrypting the service data received by the information-receiving module, storing the decryption key, and managing the switching of the current decryption key. The decrypting module further includes a key-storage submodule and a decrypting submodule.

The key-storage submodule is adapted to store both the current decryption key and non-current decryption keys received via the information-receiving module, and further includes the following units:

a first storage unit for storing the current decryption key, and

a second storage unit for storing the non-current decryption keys.

The decrypting submodule communicates with the key-storage submodule, and adapted to decrypt the service data received by the information-receiving module using the current decryption key, and switch a key which is selected from the non-current decryption keys and with which the service data can be successfully decrypted to be the current decryption key after failing to decryp with the original current decryption key.

The information-receiving module is adapted to receive and transmit key information and service data, and further includes the following submodules:

a key information-receiving submodule, communicating with the key-storage submodule, and adapted to receive a key and store the key to the key-storage submodule;

a service data-receiving submodule, communicating with the data decrypting submodule, and adapted to receive encrypted service data and transfer the received service data to the data decrypting submodule for decryption.

Embodiment 2

This embodiment will be described by taking as an example the case where the terminal side can store both the current decryption key and two or more newly received decryption keys and determine whether the data frame may be decrypted with the remaining decryption keys one by one in a reception sequence when the received data frame cannot be decrypted with the current decryption key.

Before the network side changes the encryption key of the service data, it issues in advance to the terminal side a decryption key corresponding to an encryption key that the current encryption key would be changed to be. When the terminal side receives the decryption key, it determines whether the number of stored keys reaches a preset total number of stored decryption keys; if yes, the terminal side substitutes the newly received key for the earliest received non-current decryption key; otherwise, the terminal side adds the newly received key to the locally stored keys.

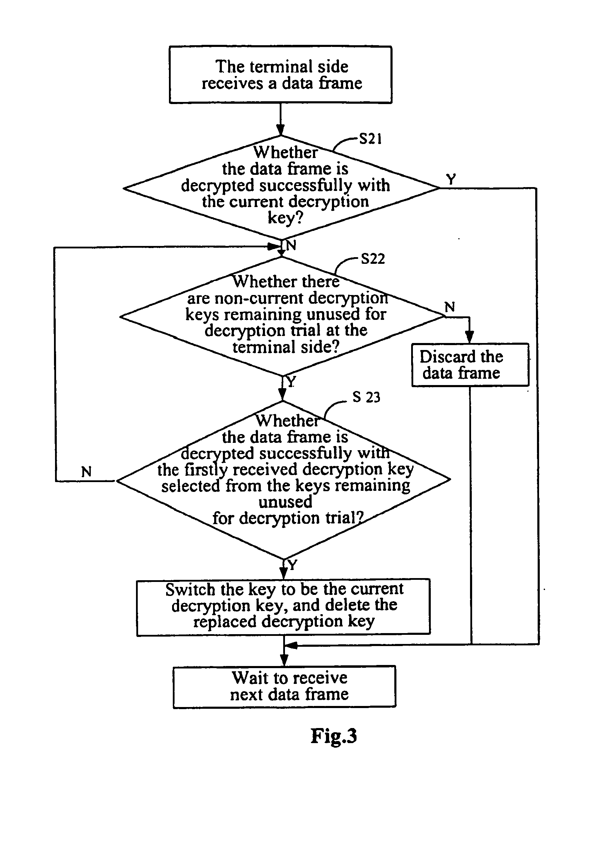

The decryption process for the terminal side each time after the terminal side receives a data frame is shown in Fig.3, which includes the following steps as follows.

In block S21, when the terminal side receives a data frame, it decrypts the data frame using the current decryption key. If the decryption succeeds, the decryption process of the data frame terminates and the terminal side waits to receive next data frame; otherwise, the decryption process proceeds to process shown in block S22.

In block S22, the terminal side determines whether there are non-current decryption keys remaining unused for decryption trial; if yes, the decryption process proceeds to process shown in block S23; otherwise, it is considered that an error occurs in the processing of the data frame. The data frame is then discarded and the terminal side waits to receive next data frame.

In block S23, the terminal side uses the firstly-received decryption key in the remaining unused keys for decryption trial to decrypt the data frame. If the decryption succeeds, this key is switched to be the current decryption key, and the replaced decryption key is discarded, and the terminal side waits to receive next data frame; otherwise, the decryption process turns to process shown in block S22.

In the process in block S23, it is also possible to use the last-received decryption key in the non-current decryption keys remaining unused for decryption trial to decrypt the data frame.

Embodiment 3

This embodiment will be described by taking as an example the case where the terminal side may save both the current decryption key and two or more non-current decryption keys, and use the two or more non-current decryption keys at the same time to decrypt the data frame when the received data frame can not be decrypted using the current decryption key.

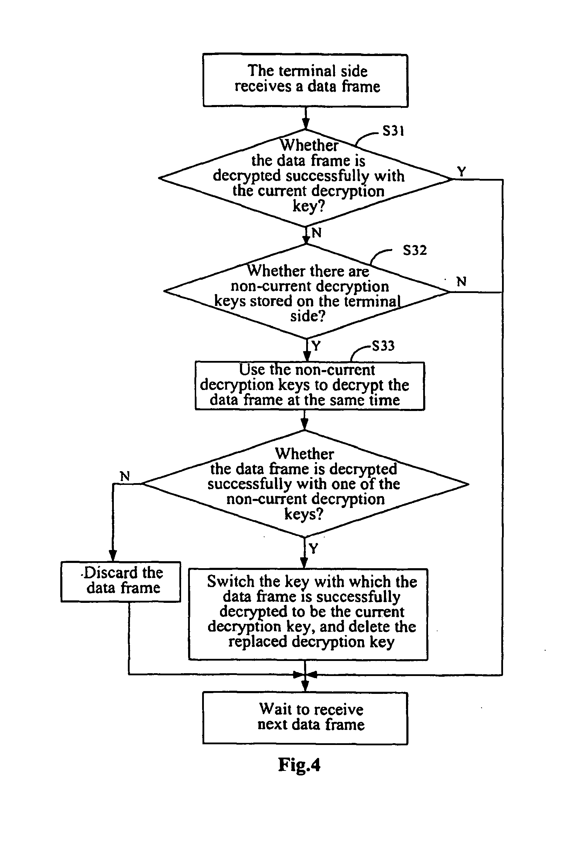

The decryption process for the terminal side each time after receiving a data frame is shown in Fig.4, which includes the following steps as follows.

In block S31, when the terminal side receives a data frame, it decrypts the data frame using the current decryption key. If the decryption succeeds, the decryption process of the data frame terminates and the terminal side waits to receive next data frame; otherwise, proceed to Step S32.

In block S32, the terminal side determines whether there are non-current decryption keys stored on the terminal side; if yes, the decryption process of the data frame proceeds to process in block S33; otherwise, the decryption process of the data frame terminates and the terminal side waits to receive next data frame.

In block S33, the terminal side uses the non-current decryption keys to decrypt the data frame at the same time. If the decryption succeeds, the key with which the data frame decryption succeeds is switched to be the current decryption key, the replaced decryption key is deleted, and the terminal side waits to receive next data frame; otherwise, it is considered that an error occurs in the processing of the data frame, the data frame is discarded, and the terminal side waits to receive next data frame.

In some situations where the requirement for encryption strength is less strict, such as less valuable news broadcast, it is not necessary to employ complex encryption/decryption algorithms, and simple packet encryption/decryption algorithms may be easily used to implement paralleled decrypting operations. Therefore, in this embodiment, when the current data frame cannot be successfully decrypted with the current decryption key, non-current decryption keys may be used in parallel to decrypt the current data frame so as to determine whether there is a decryption key with which the data frame can be decrypted successfully, so as to perform key switching.

Embodiment 4

In this embodiment, the case where the terminal side may store both the current decryption key and two or more non-current decryption keys at the same time and set a priority for the stored keys is described. The current decryption key is set with the highest priority, the non-current decryption keys are set with initial priorities according to their reception sequence or other principles respectively. The priorities are adjusted each time the key is switched.

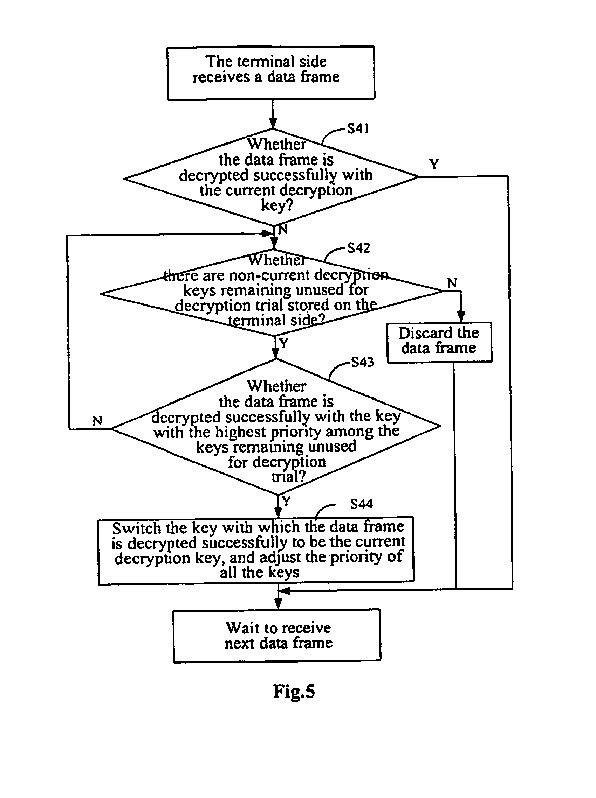

The decryption process for the terminal side each time after the terminal side receives a data frame is shown in Fig.5, which includes the steps as follows.

In block S41, when the terminal side receives a data frame, it uses the current decryption key with the highest priority to decrypt the data frame. If the decryption succeeds, the decryption process of the data frame terminates and the terminal side waits to receive next data frame; otherwise, the decryption process of the data frame proceeds to process in block S42.

In block S42, the terminal side determines whether there are non-current decryption keys remaining unused for decryption trial; if yes, the decryption process of the data frame proceeds to process in block S43; otherwise, it is considered that an error occurs in the processing of the data frame, and the data frame is discarded and the terminal side waits to receive next data frame.

In block S43, the terminal side uses the key with the highest priority in the remaining unused keys for decryption trial to decrypt the data frame. If the decryption succeeds, the decryption process of the data frame proceeds to process in block S44; otherwise, the decryption process of the data frame returns to process in block S42.

In block S44, the key with which the data frame was successfully decrypted is switched to be the current decryption key, and the terminal side adjusts the priority of all the keys and waits to receive the next data frame.

In this process in block S44, after the key switching, the current decryption key is set with the highest priority, and the priorities of the other keys are readjusted according to accumulated decryption failure times, that is, a key with higher accumulated decryption failure times is set with a lower priority; or, the priorities of the other keys are readjusted according to a accumulated period of use or accumulated times of use, that is, a key with a longer accumulated period of use or more accumulated times of use has a higher priority.

Embodiment 5

In this embodiment, the network side may issue a command at the same time when it issues a new decryption key, and designate to substitute the new decryption key for a non-current decryption key stored at the terminal side.

When the terminal side receives the new decryption key, it substitutes the newly received key for a non-current decryption key specified by the above command, according to the above command.

In the technical solution provided in one or more embodiments of the invention, the terminal side receives and stores the decryption key issued by the network side before changing the encryption key of the service data, the issued decryption key is corresponding to the changed service data; and the terminal side selects, from the locally stored keys, the key that can successfully decrypt the current service data after the network side changes the encryption key, and switches the selected key to be the current decryption key. Moreover, the priority of the decryption keys may be set, and the initial priority may be set respectively according to the reception sequence of the decryption keys or other principles, and the key priority may be adjusted each time after key switching. With the embodiments of the invention, a key selected from locally stored keys and with which the current service data can be successfully decrypted may be switched to be the current decryption key, so that the key may be switched adaptively according to the priority or reception sequence. This switching process has no special requirements for key distribution mode and synchronization, and no overhead needs to be increased to support a strict data frame synchronization mechanism, so it is applicable to more situations.

Apparently, various modifications and variations can be made by those skilled in the art without departing from the spirit and scope of the invention, and such modifications and variations fall into the protected scope of the invention.

## Claims

1. A method of key switching for decrypting service data at a terminal, the method comprising the following process:
storing at least two decryption keys at a terminal side for decrypting service data encrypted by network side using a corresponding encryption key, wherein one of the at least two decryption keys is a current decryption key;
receiving a dataframe with current service data and using the stored keys to decrypt the service data with a trial and error method, and checking whether the service data decrypted are correct based on a Cyclic Redundancy Code Check carried in the dataframe; and
selecting from the stored decryption keys a key with which the current service data can be successfully decrypted, and taking the selected decryption key as the current decryption key.

2. The method according to claim 1, wherein the current decryption key is firstly used to decrypt the received service data; if the decryption fails, the terminal side uses one or more keys from others of the at least two keys for decryption trial and selects a key from the one or more with which the service data can be decrypted successfully, and takes the key to be the current decryption key.

3. The method according to claim 2, wherein
when the terminal side decrypts a data frame, the current decryption key is firstly used; and if the decryption succeeds, the terminal side continues to decrypt next data frame; if the decryption fails, the terminal side uses one or more keys from uses others of the stored decryption keys for decryption trial at the same time, and
takes the key with which the data frame is decrypted successfully to be the current decryption key and continues to decrypt next data frame; if decryption with each of the decryption keys fails, the data frame is discarded and the terminal side continues to decrypt the next data frame.

4. The method according to claim 2, wherein
when the terminal side decrypts a data frame, the current decryption key is firstly used to decrypt the data frame; and if the decryption succeeds, the terminal side continues to decrypt the next data frame;
otherwise, the terminal side selects other keys from the stored decryption keys one by one for decryption trial according to a reception sequence or a negative sequence for decryption, and
takes the key with which the data frame is decrypted successfully to be the current decryption key and continues to decrypt next data frame; if decryption with each of the decryption keys fails, the current data frame is discarded and the terminal side continues to decrypt next data frame.

5. The method according to claim 2, wherein the terminal side sets a priority for each of the stored keys and selects a key for decryption trial according to the priority for decryption; if a data frame is decrypted successfully with one of the keys, the terminal side takes the key to be the current decryption key; if decryption with each of the decryption keys fails, the data frame is discarded and the terminal side continues to decrypt next data frame.

6. The method according to claim 5, wherein the setting priority comprises:
setting the current decryption key with the highest priority, and.adjusting the priorities of other keys according to accumulated decryption failure times, wherein a key with more accumulated decryption failure times is set with a lower priority.

7. The method according to claim 5, wherein the setting key priority comprises:
setting the current decryption key with the highest priority, and adjusting the priorities of other keys according to an accumulated period of use or accumulated times of use, wherein a key with a longer accumulated period of use or more accumulated times of use is set with a higher priority.

8. The method according to claim 2, wherein if decryption with each of the decryption keys fails, the data frame is discarded and the current decryption key is not changed and continues to be used to decrypt next data frame.

9. The method according to claim 2, wherein a total number of decryption keys to be stored in the terminal side is set, and each time receiving a new key, the terminal side determines whether the number of locally stored keys exceeds the total number; if yes, the terminal side substitutes the newly received key for the earliest received non-current decryption key; otherwise, the terminal side adds the newly received key to the locally stored keys.

10. The method according to claim 2, wherein each time receiving a new decryption key, the terminal side substitutes the newly received key for a non-current decryption key specified by the network side according to a command issued by the network side simultaneously.

11. A data decryption device, comprising:
a storage module adapted to store at least two decryption keys, one of which is a current decryption key; and
a processing module communicating with the storage module, adapted to use the decryption keys to decrypt service data in a dataframe, and when failing to decrypt the service data, use a non-current decryption key to decrypt the service data with a trial and error method, and check whether the service data decrypted are correct based on a Cyclic Redundancy Code Check carried in the dataframe, select a key with which current service data can be successfully decrypted from stored keys, and switch the selected key to be the current decryption key.

12. A terminal equipment comprising:
an information-receiving module, and
a decrypting module communicating with the information-receiving module,
wherein the decrypting module comprises:
a key-storage submodule configured to store both a current decryption key and one or more non-current decryption keys received via the information-receiving module; and
a decrypting submodule configured to decrypt service data in a dataframe received via the information-receiving module by use of the current decryption key, and when failing to decrypt the service data, use a non-current decryption key to decrypt the service data with a trial and error method, and check whether the service data decrypted are correct based on a Cyclic Redundancy Code Check carried in the dataframe, and switch a key selected from the non-current decryption keys with which the service data can be successfully decrypted, to be the current decryption key.

13. The terminal equipment according to claim 12, wherein the information-receiving module further comprises:
a key information-receiving submodule, configured to receive a key and store the key to the key-storage submodule; and
a service data-receiving submodule configured to receive encrypted service data and transfer the encrypted service data to the decrypting submodule for decryption.

## Patentansprüche

1. Verfahren zum Umschalten eines Schlüssels für das Entschlüsseln von Servicedaten an einem Terminal, wobei das Verfahren die folgenden Schritte aufweist:
Speichern zumindest zweier Entschlüsselungsschlüssel an einer Terminalseite für das Entschlüsseln von Servicedaten, die von einer Netzwerkseite unter Verwendung eines entsprechenden Verschlüsselungsschlüssels verschlüsselt wurden, wobei einer der zumindest zwei Entschlüsselungsschlüssel ein aktueller Entschlüsselungsschlüssel ist;
Empfangen eines Datenübertragungsblocks mit aktuellen Servicedaten und Verwenden des gespeicherten Schlüssels, um die Servicedaten mittels eines Versuchs- und Irrtums-Verfahrens zu entschlüsseln, und Überprüfen, ob die entschlüsselten Servicedaten zutreffend sind, basierend auf einer zyklischen Redundanzcodeprüfung, welche in einem Datenübertragungsblock ausgeführt wird; und
Auswählen eines Schlüssels aus den gespeicherten Entschlüsselungsschlüsseln, mit welchem die aktuellen Servicedaten erfolgreich entschlüsselt werden können, und Heranziehen des ausgewählten Entschlüsselungsschlüssels als aktuellen Entschlüsselungsschlüssel.

2. Verfahren nach Anspruch 1, bei dem der aktuelle Entschlüsselungsschlüssel zunächst dazu verwendet wird, die empfangenen Servicedaten zu entschlüsseln; falls die Entschlüsselung fehl schlägt, verwendet die Terminalseite einen oder mehrere Schlüssel der übrigen zumindest zwei Schlüssel für einen Entschlüsselungsversuch und wählt einen Schlüssel aus dem einen oder den mehreren aus, mit welchem die Servicedaten erfolgreich entschlüsselt werden können, und zieht den Schlüssel als aktuellen Entschlüsselungsschlüssel heran.

3. Verfahren nach Anspruch 2, bei dem,
wenn die Terminalseite einen Datenübertragungsblock entschlüsselt, der aktuelle Entschlüsselungsschlüssel als erstes verwendet wird; und falls die Entschlüsselung erfolgreich ist, die Terminalseite damit fortsetzt, den nächsten Datenübertragungsblock zu entschlüsseln; falls die Entschlüsselung fehl schlägt, die Terminalseite einen oder mehrere Schlüssel der übrigen gespeicherten Entschlüsselungsschlüssel für den Entschlüsselungsversuch zu demselben Zeitpunkt verwendet und
zieht den Schlüssel, mit welchem der Datenübertragungsblock erfolgreich entschlüsselt wird, als den aktuellen Entschlüsselungsschlüssel heran und setzt damit fort, den nächsten Datenübertragungsblock zu entschlüsseln; falls die Entschlüsselung mit jedem der Entschlüsselungsschlüssel fehl schlägt, wird der Datenübertragungsblock verworfen und die Terminalseite setzt damit fort, den nächsten Datenübertragungsblock zu entschlüsseln.

4. Verfahren nach Anspruch 2, bei dem,
wenn die Terminalseite einen Datenübertragungsblock entschlüsselt, der aktuelle Entschlüsselungsschlüssel als erstes verwendet wird, um den Datenübertragungsblock zu entschlüsseln; und falls die Entschlüsselung erfolgreich ist, die Terminalseite damit fortsetzt, den nächsten Datenübertragungsblock zu entschlüsseln;
anderenfalls wählt die Terminalseite andere Schlüssel aus den gespeicherten Entschlüsselungsschlüsseln, einen nach dem anderen für einen Entschlüsselungsversuch gemäß einer Aufnahmeabfolge oder einer negativen Abfolge für die Entschlüsselung, und
zieht denjenigen Schlüssel als den aktuellen Entschlüsselungsschlüssel heran, mit welchem der Datenübertragungsblock erfolgreich entschlüsselt wird und setzt damit fort, den nächsten Datenübertragungsblock zu entschlüsseln; falls die Entschlüsselung mit jedem der Entschlüsselungsschlüssel fehl schlägt, wird der aktuelle Datenübertragungsblock verworfen und die Terminalseite setzt damit fort, den nächsten Datenübertragungsblock zu entschlüsseln.

5. Verfahren nach Anspruch 2, bei dem die Terminalseite eine Priorität für jeden der gespeicherten Schlüssel festsetzt und gemäß der Priorität für die Entschlüsselung einen Schlüssel auswählt; falls ein Datenübertragungsblock mit einem der Schlüssel erfolgreich entschlüsselt wird, zieht die Terminalseite den Schlüssel als den aktuellen Entschlüsselungsschlüssel heran; falls die Entschlüsselung mit jedem der Entschlüsselungsschlüssel fehl schlägt, wird der Datenübertragungsblock verworfen und die Terminalseite setzt damit fort, den nächsten Datenübertragungsblock zu entschlüsseln.

6. Verfahren nach Anspruch 5, bei dem das Festsetzen der Priorität umfasst:
Festsetzen eines aktuellen Entschlüsselungsschlüssels mit der höchsten Priorität, und Anpassen der Prioritäten der anderen Schlüssel gemäß den kumulierten Häufigkeiten von Entschlüsselungsfehlschlägen, wobei ein Schlüssel mit einer höheren Anzahl kumulierter Entschlüsselungsfehlschläge mit einer niedrigeren Priorität festgesetzt wird.

7. Verfahren nach Anspruch 5, bei dem das Festsetzen der Schlüsselpriorität umfasst:
Festsetzen des aktuellen Entschlüsselungsschlüssels mit der höchsten Priorität, und Anpassen der Prioritäten der anderen Schlüssel gemäß einer kumulierten Verwendungsdauer oder kumulierten Verwendungshäufigkeit, wobei ein Schlüssel mit einer längeren kumulierten Verwendungsdauer oder höheren kumulierten Verwendungshäufigkeit mit einer höheren Priorität festgesetzt wird.

8. Verfahren nach Anspruch 2, bei dem der Datenübertragungsblock verworfen wird und der aktuelle Entschlüsselungsschlüssel nicht gewechselt und weiterhin für das Entschlüsseln des nächsten Datenübertragungsblocks verwendet wird, falls die Entschlüsselung mit jedem der Entschlüsselungsschlüssel fehl schlägt.

9. Verfahren nach Anspruch 2, bei dem eine Gesamtzahl Entschlüsselungsschlüssel, die in der Terminalseite gespeichert werden sollen, festgesetzt wird, und wobei jedes Mal, wenn ein neuer Schlüssel empfangen wird, die Terminalseite ermittelt, ob die Anzahl lokal gespeicherter Schlüssel die Gesamtzahl übersteigt; falls ja, ersetzt die Terminalseite den am frühesten empfangenen nicht aktuellen Entschlüsselungsschlüssel mit dem neu empfangenen Schlüssel; anderenfalls fügt die Terminalseite den neu empfangenen Schlüssel zu den lokal gespeicherten Schlüsseln hinzu.

10. Verfahren nach Anspruch 2, bei dem jedes Mal, wenn ein neuer Entschlüsselungsschlüssel empfangen wird, die Terminalseite einen nicht aktuellen Entschlüsselungsschlüssel, der von der Netzwerkseite gemäß einem von der Netzwerkseite gleichzeitig ausgesandten Befehl beschrieben wird, durch den neu empfangenen Schlüssel ersetzt.

11. Datenentschlüsselungsvorrichtung, die aufweist:
ein Speichermodul, das dazu ausgelegt ist, zumindest zwei Entschlüsselungsschlüssel zu speichern, von denen einer ein aktueller Entschlüsselungsschlüssel ist; und
ein Bearbeitungsmodul, das mit dem Speichermodul in Verbindung steht, dazu ausgelegt, die Entschlüsselungsschlüssel zum Entschlüsseln der Servicedaten in einem Datenübertragungsblock zu verwenden, und wenn dieses fehl schlägt, die Servicedaten zu entschlüsseln, verwendet es einen nicht aktuellen Entschlüsselungsschlüssel, um die Servicedaten mit einem Versuchs- und Irrtums-Verfahren zu entschlüsseln, und überprüft, ob die entschlüsselten Servicedaten zutreffend sind, basierend auf einer zyklischen Redundanzcodeprüfung, die in dem Datenübertragungsblock ausgeführt wird, wählt einen Schlüssel aus, mit welchem die aktuellen Servicedaten erfolgreich aus den gespeicherten Schlüsseln entschlüsselt werden können, und tauscht den ausgewählten Schlüssel aus, um der aktuelle Entschlüsselungsschlüssel zu sein.

12. Terminaleinrichtung, die aufweist:
ein Informationsempfangsmodul, und
ein Entschlüsselungsmodul, das mit dem Informationsempfangsmodul in Verbindung steht, wobei das Entschlüsselungsmodul aufweist:
ein Schlüsselspeicheruntermodul, dass dazu ausgelegt ist, sowohl einen aktuellen Entschlüsselungsschlüssel als auch einen oder mehrere nicht aktuelle Entschlüsselungsschlüssel zu speichern, die über das Informationsempfangsmodul empfangen worden sind; und
ein Entschlüsselungsuntermodul, das dazu ausgelegt ist, Servicedaten in einem Datenübertragungsblock zu entschlüsseln, der über das Informationsempfangsmodul empfangen worden ist, unter Verwendung des aktuellen Entschlüsselungsschlüssels, und wenn es fehl schlägt, die Servicedaten zu entschlüsseln, verwendet es einen nicht aktuellen Entschlüsselungsschlüssel, um die Servicedaten mittels eines Versuchs- und Irrtums-Verfahrens zu entschlüsseln und überprüft, ob die entschlüsselten Servicedaten zutreffend sind, basierend auf einer zyklischen Redundanzcodeprüfung, welche in dem Datenübertragungsblock ausgeführt wird, und schaltet auf einen Schlüssel um, der aus den nicht aktuellen Entschlüsselungsschlüsseln ausgewählt wird und mit welchem die Servicedaten erfolgreich entschlüsselt werden können, als der aktuelle Entschlüsselungsschlüssel.

13. Terminaleinrichtung nach Anspruch 12, bei der das Informationsempfangsmodul zusätzlich aufweist:
ein Schlüsselinformationsempfangsuntermodul, das dazu ausgelegt ist, einen Schlüssel zu empfangen und den Schlüssel in dem Schlüsselspeicheruntermodul abzuspeichern; und
ein Servicedatenempfangsuntermodul, das dazu ausgelegt ist, verschlüsselte Servicedaten zu empfangen und die verschlüsselten Servicedaten an das Entschlüsselungsuntermodul für die Entschlüsselung weiterzuleiten.

## Revendications

1. Procédé de commutation de clés à des fins de décryptage de données de service au niveau d'un terminal, le procédé comportant les processus suivants :
stocker au moins deux clés de décryptage au niveau d'un côté terminal à des fins de décryptage de données de service cryptées par le côté réseau en utilisant une clé de cryptage correspondante, dans lequel l'une desdites au moins deux clés de décryptage est une clé de décryptage en cours ;
recevoir une trame de données contenant des données de service en cours et utiliser les clés stockées pour décrypter les données de service à l'aide d'un procédé par essais et erreurs, et vérifier si les données de service décryptées sont correctes en se basant sur un contrôle de code de redondance cyclique réalisé dans la trame de données ; et
sélectionner parmi les clés de décryptage stockées une clé avec laquelle les données de service en cours peuvent être décryptées avec succès, et considérer la clé de décryptage sélectionnée comme étant la clé de décryptage en cours.

2. Procédé selon la revendication 1, dans lequel le clé de décryptage en cours est tout d'abord utilisée pour décrypter les données de service reçues ; si le décryptage aboutit à un échec, le côté terminal utilise une ou plusieurs clés des autres desdites au moins deux clés à des fins d'essai de décryptage et sélectionne une clé parmi lesdites une ou plusieurs clés avec laquelle les données de service peuvent être décryptées avec succès, et considère la clé comme étant la clé de décryptage en cours.

3. Procédé selon la revendication 2, dans lequel
quand le côté terminal décrypte une trame de données, la clé de décryptage en cours est tout d'abord utilisée ; et si le décryptage aboutit avec succès, le côté terminal continue à décrypter la trame de données suivante ; si le décryptage aboutit à un échec, le côté terminal utilise une ou plusieurs clé des autres des clés de décryptage stockées à des fins d'essai de décryptage en même temps, et
considère la clé avec laquelle la trame de données est décryptée avec succès comme étant la clé de décryptage en cours et continue à décrypter la trame de données suivante ; si le décryptage avec chacune des clés de décryptage aboutit à un échec, la trame de données est supprimée et le côté terminal continue à décrypter la trame de données suivante.

4. Procédé selon la revendication 2, dans lequel
quand le côté terminal décrypte une trame de données, la clé de décryptage en cours est tout d'abord utilisée pour décrypter la trame de données ; et si le décryptage aboutit avec succès, le côté terminal continue à décrypter la trame de données suivante ;
sinon, le côté terminal sélectionne d'autres clés parmi les clés de décryptage stockées une à une à des fins d'essai de décryptage en fonction d'une séquence de réception ou d'une séquence négative à des fins de décryptage, et
considère la clé avec laquelle la trame de données est décryptée avec succès comme étant la clé de décryptage en cours et continue à décrypter la trame de données suivante ; si le décryptage avec chacune des clés de décryptage aboutit à un échec, la trame de données en cours est supprimée et le côté terminal continue à décrypter la trame de données suivante.

5. Procédé selon la revendication 2, dans lequel le côté terminal règle une priorité pour chacune des clés stockées et sélectionne une clé à des fins d'essai de décryptage en fonction de la priorité de décryptage ; si une trame de données est décryptée avec succès avec l'une des clés, le côté terminal considère la clé comme étant la clé de décryptage en cours ; si le décryptage avec chacune des clés de décryptage aboutit à un échec, la trame de données est supprimée et le côté terminal continue à décrypter la trame de données suivante.

6. Procédé selon la revendication 5, dans lequel le réglage de la priorité comporte :
régler la clé de décryptage en cours avec la priorité la plus élevée, et ajuster les priorités des autres clés en fonction du nombre d'échecs de décryptage accumulés, dans lequel une clé ayant un plus grand nombre d'échecs de décryptage accumulés est réglée avec une priorité inférieure.

7. Procédé selon la revendication 5, dans lequel le réglage de la priorité des clés comporte :
régler la clé de décryptage en cours avec la priorité la plus élevée, et ajuster les priorités des autres clés en fonction de la durée accumulée d'utilisation ou du nombre accumulé de fois d'utilisation, dans lequel une clé ayant une plus grande durée accumulée d'utilisation ou un plus grand nombre accumulé de fois d'utilisation est réglée avec une priorité supérieure.

8. Procédé selon la revendication 2, dans lequel si le décryptage avec chacune des clés de décryptage aboutit à un échec, la trame de données est supprimée et la clé de décryptage en cours n'est pas changée et continue à être utilisée pour décrypter la trame de données suivante.

9. Procédé selon la revendication 2, dans lequel un nombre total de clés de décryptage destinées à être stockées dans le côté terminal est réglé, et à chaque fois que l'on reçoit une nouvelle clé, le côté terminal détermine si le nombre de clés stockées localement dépasse le nombre total ; si oui, le côté terminal remplace, à l'aide de la clé venant d'être reçue, la clé de décryptage non en cours reçue plus tôt ; si non, le côté terminal ajoute la clé venant d'être reçue aux clés stockées localement.

10. Procédé selon la revendication 2, dans lequel à chaque fois que l'on reçoit une nouvelle clé de décryptage, le côté terminal remplace, à l'aide de la clé venant d'être reçue, une clé de décryptage non en cours spécifiée par le côté réseau en fonction d'une commande émise simultanément par le côté réseau.

11. Dispositif de décryptage de données, comportant :
un module de stockage adapté pour stocker au moins deux clés de décryptage, l'une d'entre elles étant une clé de décryptage en cours ; et
un module de traitement en communication avec le module de stockage, adapté pour utiliser les clés de décryptage à des fins de décryptage des données de service dans une trame de données, et en cas d'échec de décryptage des données de service, adapté pour utiliser une clé de décryptage non en cours à des fins de décryptage des données de service à l'aide d'un procédé par essais et erreurs, et adapté pour vérifier si les données de service décryptées sont correctes en se basant sur un contrôle de code de redondance cyclique réalisé dans la trame de données, adapté pour sélectionner une clé avec laquelle les données de service en cours peuvent être décryptées avec succès parmi les clés stockées, et adapté pour commuter la clé sélectionnée comme étant la clé de décryptage en cours.

12. Équipement terminal comportant :
un module de réception d'informations, et
un module de décryptage en communication avec le module de réception d'informations, dans lequel le module de décryptage comporte :
un sous-module de stockage de clés configuré pour stocker à la fois une clé de décryptage en cours et une ou plusieurs clés de décryptage non en cours reçues par le biais du module de réception d'informations ; et
un sous-module de décryptage configuré pour décrypter des données de service dans une trame de données reçue par le biais du module de réception d'informations par l'utilisation de la clé de décryptage en cours, et en cas d'échec de décryptage des données de service, configuré pour utiliser une clé de décryptage non en cours pour décrypter les données de service à l'aide d'un procédé par essais et erreurs, et configuré pour vérifier si les données de service décryptées sont correctes en se basant sur un contrôle de code de redondance cyclique réalisé dans la trame de données, et configuré pour commuter une clé sélectionnée parmi les clés de décryptage non en cours avec laquelle les données de service peuvent être décryptées avec succès, comme étant la clé de décryptage en cours.

13. Équipement terminal selon la revendication 12, dans lequel le module de réception d'informations comporte par ailleurs :
un sous-module de réception d'informations de clés, configuré pour recevoir une clé et stocker la clé dans le sous-module de stockage de clés ; et
un sous-module de réception de données de service configuré pour recevoir des données de service cryptées et transférer les données de service cryptées au sous-module de décryptage à des fins de décryptage.
